# FASCICULE DE BREVET EUROPEEN

(11) **EP 1 235 629 B1**
(45) Date de publication et mention de la délivrance du brevet: **30.04.2008**
(21) Numéro de dépôt: 01976349.9
(22) Date de dépôt: 02.10.2001
(51) Int. Cl.: B01D 46/52, B29C 65/18, B60H 3/06

(54) **DISPOSITIF DE FILTRATION, NOTAMMENT POUR VEHICULE AUTOMOBILE, PROCEDE DE FABRICATION TEL DISPOSITIF DE FILTRATION ET DISPOSITIF POUR LA MISE EN OEUVRE DU PROCEDE**
FILTERVORRICHTUNG, INSBESONDERE FÜR EIN KRAFTFAHRZEUG, VERFAHREN ZUR HERSTELLUNG SOLCH EINER FILTERVORRICHTUNG UND VORRICHTUNG ZUR DURCHFÜHRUNG DES VERFAHRENS
FILTERING DEVICE, IN PARTICULAR FOR MOTOR VEHICLE, METHOD FOR MAKING SAME AND DEVICE THEREFOR

(30) Priorité: 03.10.2000 FR 0012615; 23.05.2001 FR 0106825
(43) Date de publication de la demande: 04.09.2002
(73) Titulaire: Valeo Matériaux de Friction, 87020 Limoges cedex 9 (FR)
(72) Inventeur: DEWITTE, Jean-Marc, F-33700 Merignac (FR); SIMON, Olivier, F-14123 Ifs (FR)
(74) Mandataire: Lemaire, Marc
(86) Numéro de dépôt international: PCT/FR2001/003034
(87) Numéro de publication internationale: WO 2002/028508

(56) Documents cités:
- EP-A- 0 528 682
- WO-A-99/37385
- JP-A- 1 018 414
- US-A- 5 089 202
- US-A- 6 010 548

## Description

### Domaine technique de l'invention

La présente invention a pour objet un dispositif de filtration destiné à équiper un appareil d'aération et/ou de chauffage et/ou climatisation, notamment pour véhicule automobile.

La présente invention concerne également un procédé de fabrication d'un tel dispositif de filtration et un dispositif pour la mise en oeuvre du procédé.

Un tel dispositif de filtration est constitué généralement d'un élément filtrant entouré d'un cadre de support. L'élément filtrant comprend un média filtrant formant filtre à particules formé d'un mat de non tissé constitué d'un voile de carde en une nappe unique et constitué de fibres en matériau thermoplastique, par exemple en polypropylène. Une grille, en matériau thermoplastique et en général également en polypropylène, est superposée à ce mat et se trouve placée en aval par rapport au sens de circulation de l'air dans le dispositif de filtration. Eventuellement, une seconde grille dite d'entrée est placée en amont du media. L'ensemble de ces composants, mat non tissé et grille(s), est plissé.

### Etat de la technique

Un tel ensemble peut être réalisé sans solidarisation entre le mat et la grille, l'ensemble étant lié uniquement par le cadre de support périphérique comme décrit par exemple dans le document FR A 2 772 670.
Cependant, dans ce cas, une désolidarisation peut se produire en cas de chocs, de chutes ou de vibrations lors de la manipulation, du conditionnement ou du transport. Par ailleurs, dans le cas où le dispositif de filtration est monté par erreur à l'envers, c'est-à-dire avec la grille en amont par rapport au sens de circulation de l'air, il se produit un décollement du mat filtrant par rapport à la grille provoqué par la pression d'air.

Il a donc été envisagé de solidariser le mat de non plissé et la grille ou les grilles.

L'invention se rapporte donc plus précisément à un mode de solidarisation et à un procédé de fabrication d'un dispositif de filtration comportant un media filtrant en nappe et au moins une grille de matière thermoplastique, procédé comportant une étape de superposition du media et de la grille, une étape de fixation de ces deux éléments et une étape de plissage de ces deux éléments superposés.

Dans un tel procédé connu, l'étape de fixation consiste en un calandrage à chaud des éléments disposés entre rouleaux ou calandres sur toute leur surface. Un tel mode de réalisation nécessite le traitement des éléments dans une machine de calandrage puis le traitement du produit ainsi obtenu dans une machine de plissage ou plisseuse.

Une opération de reprise est donc nécessaire entre ces deux machines entraînant une perte de temps et une augmentation de la main d'oeuvre et du coût.

En variante l'étape de fixation consiste en une projection de fibres en fusion sur la grille. Ces fibres en refroidissant adhèrent à la grille sur toute sa surface en sorte qu'il se produit un phénomène de colmatage ce qui augmente les pertes de charge.

On connait également, d'aprés JP 01 01 84 14, un dispositif de filtration conforme au preambule de la revendication 1.

### Objet de l'invention

L'invention résout ce problème et, pour ce faire, l'étape de fixation consiste en la réalisation locale de manière ciblée d'au moins une soudure par fusion telle qu'une soudure par ultrasons, cette étape de fixation étant selon le procédé de l'invention intercalée entre l'étape de superposition et l'étape de plissage.

La soudure est réalisée de manière ciblée sur une ou plusieurs lignes de très faible surface ou en variante par points sans altération des performances du dispositif de filtration. Ainsi on n'augmente pas les pertes de charge. Les phénomènes de colmatage ne se produisent pas.

Dans une forme de réalisation la soudure par points permet de constituer une ou plusieurs lignes de soudage discontinue de faible surface.

Dans une forme de réalisation la soudure est une soudure par ultrasons.

Un agencement de soudure par ultrasons est particulièrement peu encombrant et peut être inséré directement sur la plisseuse. Il en résulte un gain de temps important et donc un coût inférieur.

Une telle soudure limite considérablement les risques de décollement du mat non tissé, sans altérer ses performances.

Ce système de fabrication est très souple d'utilisation et s'adapte aux cadences de défilement de la plisseuse.

En variante le soudage est réalisé par fusion à la molette ou par fusion à la toupie, qui s'adapte également aux cadences de défilement de la plisseuse en étant très souple d'utilisation.

Selon un premier mode de réalisation préféré, la soudure est réalisée parallèlement au sens de déplacement des éléments lors de l'étape de plissage.

Selon un second mode de réalisation préféré, la soudure est réalisée grâce à un agencement de soudage mobile translaté perpendiculairement au sens de déplacement des éléments lors de l'étape de plissage.

Avantageusement, cette étape de fixation est réalisée sur la même machine que l'étape de plissage.

L'invention se rapporte également à un dispositif pour la mise en oeuvre du procédé précédemment décrit.

Selon le mode de réalisation préféré, il comporte un agencement de soudure mis en place au droit desdits éléments entre des rouleaux d'alimentation du média et de la grille en bande et une plisseuse.

Selon une première variante, l'agencement de soudure est constitué d'une enclume fixe disposée sous lesdits éléments et d'une sonotrode fixe disposée en vis à vis sur lesdits éléments.

Selon une seconde variante, l'agencement de soudure est constitué d'une enclume, formant contre-pièce, disposée sous lesdits éléments et d'une sonotrode associée disposée en vis à vis sur lesdits éléments et mobile translatée perpendiculairement au sens de déplacement des éléments lors de l'étape de plissage.

En variante la sonotrode est remplacée par une molette ou une toupie.

Selon l'invention le dispositif de filtration obtenu par le procédé comportant un media filtrant en nappe et au moins une grille de matière thermoplastique peut comporter au moins une ligne de soudure droite et longitudinale ou au moins une ligne de soudure en zigzag.

### Description sommaire des dessins

La description ci-après illustre l'invention, en référence aux dessins annexés dans lesquels :
la figure 1 est une vue schématique en perspective d'un dispositif de filtration selon l'invention ;
les figures 2 et 3 sont des vues agrandies des loupes II et III de la figure 1 ;
la figure 4 est une vue analogue à la figure 2 et montre une variante ;
la figure 5 est une vue en perspective d'un dispositif pour la mise en oeuvre d'un procédé de soudage par fusion conforme à l'invention ;
la figure 6 est une vue en coupe longitudinale du dispositif de la figure 5 ;
la figure 7 est une vue analogue à la figure 6 pour un deuxième exemple de réalisation conforme à l'invention.

### Description de modes de réalisation préférentiels

Le dispositif de filtration 10 comporte un média filtrant 11 formant filtre à particules, formé d'un mat de non tissé constitué d'un voile de carde en une nappe unique. Le média filtrant 11 est ici plissé.

Le mat de non tissé est à base de fibres longues dont la longueur est, de préférence, au moins égale à 38 mm. Les fibres longues présentent un diamètre moyen égal ou supérieur à 10 µm. Lesdites fibres sont en matériau thermoplastique, ici en polypropylène.

Le mat de non tissé est associé à une grille en matériau thermoplastique, par exemple en polypropylène. Celle-ci se trouve placée en aval par rapport au sens de circulation de l'air dans le dispositif de filtration 10.

Le média filtrant 11 en variante est associé à deux grilles, plissées de même nature et placées respectivement en aval et en amont par rapport au sens de circulation de l'air dans le dispositif de filtration.

Cette ou ces grilles sont solidarisées au mat de non tissé.

Suivant l'invention cette solidarisation est réalisée localement de manière ciblée au moins par une soudure par fusion, telle qu'une soudure par ultrasons, qui peut n'être que partielle.

Cette soudure est réalisée entre une étape de superposition du média filtrant 11 et de la grille une étape de plissage.

Le dispositif de filtration 10 peut constituer un filtre à particules ou un filtre dit combiné, c'est-à-dire à la fois un filtre à particules et un filtre arrêtant des gaz délétères. Dans ce cas, sont ajoutés des moyens d'adsorption de gaz.

Les moyens d'adsorption de gaz peuvent comporter un lit de charbon activé ou un tissu de carbone souple plissé de la même manière.

Un cadre 12 est prévu pour supporter les différents constituants du dispositif de filtration.

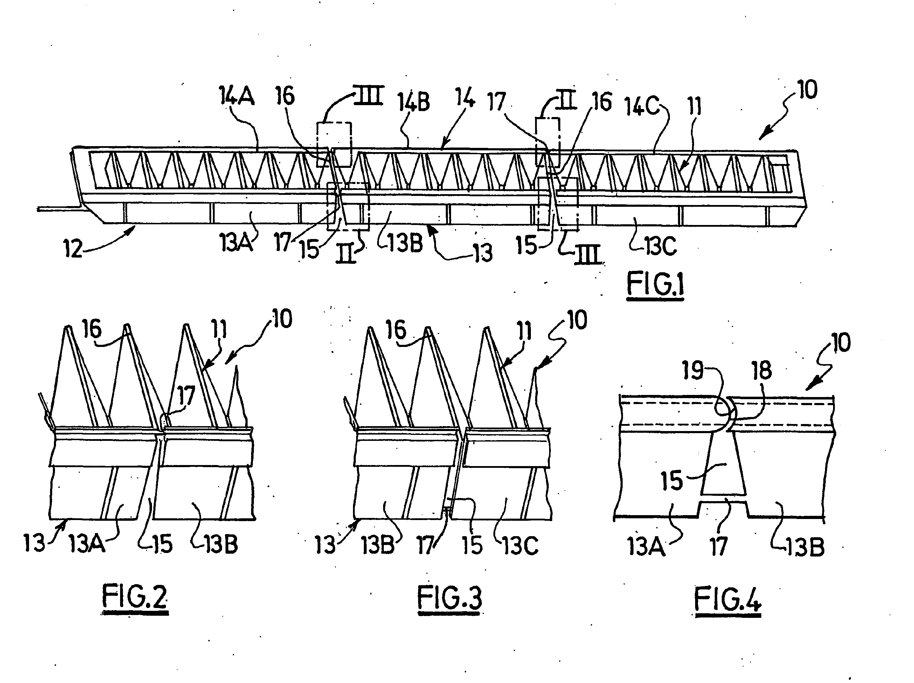

Le cadre 12 comprend deux éléments longitudinaux ou parois latérales 13, 14 recouvrant, par surmoulage, les bords longitudinaux du média filtrant 12, ici les extrémités en forme de V des plis du média filtrant 11 plissé. Le cadre est ici rigide en étant en matière plastique sécable. Il est dans la figure 1 de forme rectangulaire.

Dans l'exemple représenté, les parois latérales 13, 14 sont constituées chacune de trois parties 13A, 13B, 13C, 14A, 14B, 14C séparées par un intervalle 15 au droit duquel le média filtrant 11 réalise une charnière souple 16 permettant aux trois éléments de filtre ainsi réalisés d'être articulés l'un par rapport à l'autre autour desdites charnières 16.

La déformation du dispositif de filtration 10 est permise par celle naturelle du média filtrant 11 souple et par celle du cadre 12, notamment de ses parois latérales 13, 14 capables de se déformer dans leur plan grâce à leur constitution en trois parties.

Grâce à la constitution ainsi décrite du filtre, celui-ci présente des caractéristiques intéressantes de souplesse qui permettent de le courber afin d'introduire plus facilement le filtre dans un appareil de chauffage et/ou ventilation et/ou climatisation de véhicule automobile. Ceci est particulièrement avantageux lorsque, comme c'est très souvent le cas, l'accessibilité au logement du filtre est difficile.

Pour obtenir un tel dispositif de filtration 10 à éléments de filtres séparés, et pour assurer son propre maintien avant utilisation, on prévoit de partir d'un dispositif de filtration 10 dans lequel les parties d'éléments longitudinaux des éléments de filtre sont reliées par un pont sécable destiné à casser lors de la première utilisation.

Bien entendu, la mise en place du dispositif de filtration sera d'autant plus aisée que les ponts cassent sûrement, soit au fur et à mesure de son introduction, soit avant son introduction par pliage préalable. Après cassure des ponts le média filtrant constitue une articulation entre les parties du cadre.

Pour ce faire, lesdits ponts 17 sont judicieusement placés en sorte de mettre à profit non seulement la rotation des parties adjacentes autour des charnières 16 mais également une certaine torsion entre elles.

Ainsi, dans un plan transversal, perpendiculaire aux parois 13 et 14, les ponts sécables sont disposés en diagonale, c'est-à-dire qu'ils sont décalés longitudinalement : sur la figure 1, les bulles II montrent la présence d'un pont sécable 17, et les bulles III, transversalement en face des bulles II, montrent l'absence d'un tel pont ; ceci signifie que, par exemple, s'agissant des deux éléments de filtre comprenant, d'un côté les parties 13A, 13B et de l'autre côté les parties 14A et 14B, seules les parties 13A et 13B sont reliées par un pont sécable ; de même, les parties 14B et 14C sont reliées par un pont sécable 17 et les parties 13B et 13C ne le sont pas.

On pourrait également relier les parties ci-dessus qui ne le sont pas, mais dans ce cas, d'un côté le pont est à un niveau dit supérieur et de l'autre à un niveau inférieur, et ce dans une même section transversale : ainsi, alors que les parties 14B et 14C sont reliées par un pont 17 au niveau supérieur, par rapport à la figure, les parties 13B et 13C pourraient être reliées par un pont 17 au niveau inférieur, comme montré en traits mixtes sur la figure 3.

On pourrait également prévoir, du côté où se situe un pont sécable, et à distance de celui-ci, des moyens d'arc-boutement complémentaires 18, 19 portés respectivement par deux parties adjacentes, telles que 13A et 13B comme illustré sur la figure 4 ; ainsi, dès le début de la déformation relative des parties 13A et 13B, tout l'effort dû à cette déformation est immédiatement concentré sur le pont 17, qui casse alors de manière certaine.

De très bons résultats ont été obtenus en réalisant un cadre 12 en Acrylonitrile Butadiène Styrène.

En variante les ponts sont remplacés par des charnières souples non sécables.

En variante le cadre ne comporte que les deux parois latérales.

En variante le cadre est souple. Comme décrit dans le document FR A 2 772 670 le cadre souple est alors avantageusement à base de polypropylène comme la grille et le mat ; la fixation du cadre à la grille étant alors réalisée par une opération dite de soudure miroir.

En variante les deux grilles ne sont pas de même nature.

La réalisation du mat de non tissé peut être effectuée comme suit.

Des fibres de polypropylène d'une finesse de 1,7 dtex (diamètre 14µm) coupées à une longueur de 40 mm sont introduites dans un mélangeur.

Le mélange de fibres obtenu est ensuite introduit dans une démoteuse puis dans un silo de stockage avant d'être cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à environ 150g/m².

La nappe est déposée sur un tapis puis consolidée par une opération de liage hydraulique.

L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres conférant à la nappe une résistance mécanique importante sans pour autant en augmenter, de manière conséquente, la densité.

Après passage dans un tunnel de séchage, la nappe est enroulée.

La nappe est ensuite reprise pour subir une opération de plissage.

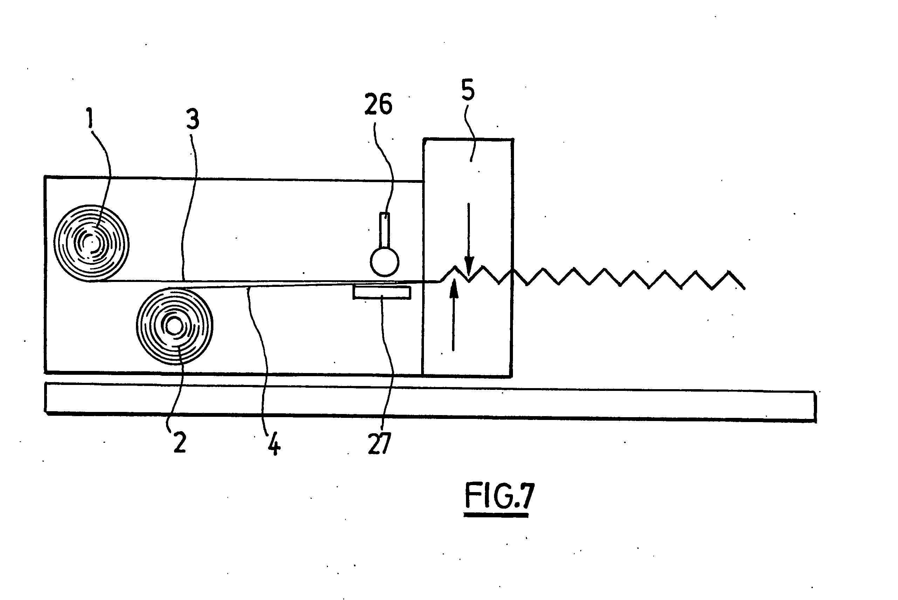

Pour plus de précisions on se reportera au document FR A 2 772 670 précité et notamment à la figure 7 de celui-ci.

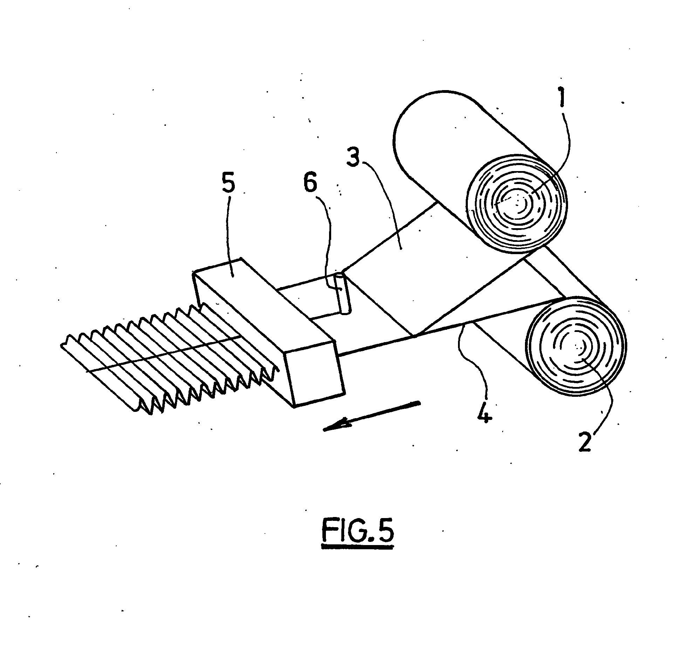

Plus précisément ici le dispositif de fabrication de l'ensemble des composants que sont le mat de non tissé et une grille comporte, comme représenté en figure 5, au moins deux bobines d'alimentation 1 et 2 portant l'un le mat 3 du média filtrant 11 et l'autre la grille 4, agencés pour obtenir lors du déroulement de la nappe enroulée une superposition de ces deux éléments et alimentant une plisseuse 5 réalisant le plissage dans le sens transversal des deux bandes.

Une solidarisation du mat et de la grille consiste en la réalisation d'au moins une soudure par fusion, telle qu'une soudure par ultrasons, cette étape de fixation étant réalisée sur la même machine que l'étape de plissage. Cette soudure est réalisée parallèlement au sens de déplacement des éléments lors de l'étape de plissage.

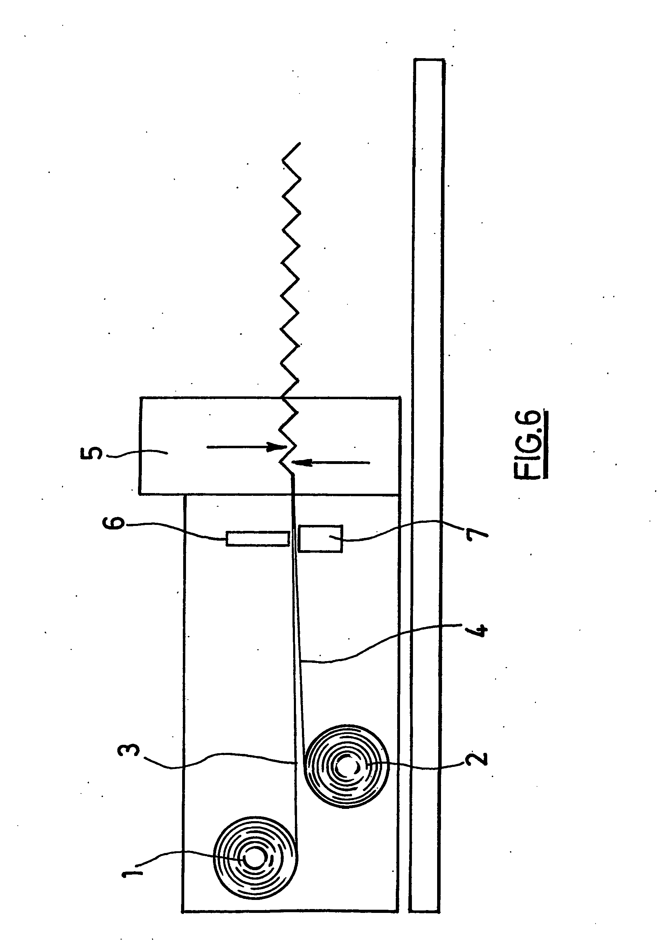

Pour ce faire, à la figure 6 un agencement de soudure par ultrasons est disposé sur lesdits éléments 3 et 4 entre les rouleaux d'alimentation 1 et 2 et la plisseuse 5. Cet agencement de soudure est constitué d'une enclume fixe disposée sous lesdits éléments 3 et 4 et d'une sonotrode fixe 6 disposée en vis à vis sur lesdits éléments. L'enclume constitue une contre-pièce.

La figure 6 est une vue du dispositif de fabrication de l'ensemble des composants dans le cas d'un dispositif de filtration comportant une grille 4 associée à un mat de non tissé 3. Deux bobines d'alimentation 1, 2 sont prévues et alimentent la plisseuse 5. L'agencement de soudure par ultrasons y est complètement visible, avec son enclume 7 et sa sonotrode 6.

Pour mémoire on rappellera que le soudage par ultrasons est un procédé de soudage en phase solide sous pression. Le mat 3 et la grille 4 sont serrés l'un contre l'autre entre l'enclume 7 et la sonotrode 6, qui produit des vibrations transversales ainsi que des frictions localisées qui décapent la surface et élèvent la température jusqu'à la formation de la soudure. Les atomes de l'interface à assembler se combinent grâce aux forces d'interaction atomiques.

Dans les modes de réalisation préférés ici décrits, une seule ligne droite de soudure est réalisée sensiblement sur la ligne longitudinale de symétrie des bandes de mat et de grille. Avec le procédé conforme à l'invention, il est possible de réaliser plusieurs lignes droites de soudure parallèles, par exemple en cas de réalisation d'un dispositif de filtration de grande largeur, ceci en utilisant plusieurs agencements de soudures alignés.

Ici, l'agencement de soudure est fixe mais toujours selon ce procédé, on peut utiliser un agencement de soudure mobile. Avantageusement, il peut être translaté sur un rail parallèle à la plisseuse afin de réaliser une ligne de soudure en zigzag sur toute la largeur des bandes. La soudure est donc réalisée sur une ou plusieurs lignes de très faible surface et donc sans altération des performances du dispositif de filtration. On n'augmente pas les pertes de charges. II n'y a pour ainsi dire pas de phénomènes de colmatage.

En variante à la figure 7 le soudage est réalisé par fusion à la molette.

Plus précisément une molette 26 supérieure est portée à une température suffisante, qui provoque une élévation de température par effet Joule et la fusion des deux pièces 3,4. La molette 26 est par exemple traversée par un courant électrique et est appliquée ici sous pression sur le médiat 3. Bien entendu une contre pièce 27 inférieure permet de soutenir le média 3 en étant en contact avec la grille 4. La molette et la contre-pièce 27 sont montées sur la machine de plissage 5 avant les lames de plissage.

La largeur de la molette 26 est faible, par exemple de l'ordre de 1 à 2 mm de manière à obtenir des lignes de soudure de faible largeur.

Ce procédé est économique car il est réalisé sur la machine de plissage sans reprise nécessaire comme dans le mode de réalisation par soudure par ultrasons. Ce procédé est réalisé avant l'opération de plissage proprement dite.

En variante la contre-pièce 27 est conservée et la molette est remplacée par une toupie de faible largeur tournant à grande vitesse sur laquelle on applique une pression Cette toupie réalise un malaxage de la matière du mat et de la grille serrés entre la toupie et la contre pièce. Un soudage par friction est ainsi réalisé.

En variante la molette est remplacée par une pièce mobile en translation perpendiculairement au mat 3 La pièce mobile est chauffée pour réaliser une fusion localisée du mat et de la grille serrés entre la contre-pièce et la pièce mobile en translation. La pièce mobile a une faible largeur. On obtient un soudage par points reconstituant avantageusement une ligne de soudure discontinue. En variante on utilise plusieurs pièces mobiles.

Avec la pièce mobile ou la toupie le procédé est économique car il est réalisé sur la machine de plissage sans reprise avant l'étape de plissage proprement dite.

En variante le soudage par fusion est un soudage du type Laser réalisé avant plissage.

L'invention s'applique également au cas où le média filtrant 11 dépasse latéralement du cadre 12 en sorte que celui-ci est légèrement en retrait par rapport à l'extrémité du média filtrant 11, comme décrit dans la demande de brevet français déposée le 28 juillet 2000 sous le numéro 00 09 982.

Bien entendu, comme connu en soi, un joint d'étanchéité peut être associé aux éléments longitudinaux 13, 14.

## Revendications

1. Dispositif de filtration destiné à équiper un appareil d'aération et/ou de chauffage et/ou de climatisation, notamment pour véhicule automobile, comportant un média filtrant en nappe (3) et au moins une grille (4) en matière thermoplastique, la grille et le média filtrant étant plissés de manière à former des lignes de plissage, et étant fixés localement de manière ciblée au moins par une soudure par fusion, **caractérisé en ce que** la soudure par fusion suit une ligne de soudure formant un angle non nul avec au moins une ligne de plissage.

2. Dispositif de filtration selon la revendication 1, **caractérisé par**le fait que la ligne de soudure est perpendiculaire à la ligne de plissage.

3. Dispositif de filtration selon la revendication 1, **caractérisé par le fait que** la ligne de soudure est en zigzag.

4. Dispositif de filtration selon l'une quelconque des revendications 1 à 3, **caractérisé par le fait que** la ligne de soudure est discontinue.

5. Dispositif de filtration selon la revendication 1, **caractérisé par le fait que** la soudure est réalisée selon une ou plusieurs lignes de faible surface.

6. Dispositif de filtration selon la revendication 1, **caractérisé par le fait que** le média filtrant (11) comprend un mat de non tissé constitué d'un voile de carde.

7. Dispositif de filtration selon la revendication 6, **caractérisé par le fait que** le voile de carde forme une nappe unique.

8. Dispositif de filtration selon la revendication 7, **caractérisé par le fait que** le voile de carde comporte des fibres longues présentent un diamètre moyen égal ou supérieur à10 µ*m*.

9. Dispositif de filtration selon la revendication 8, **caractérisé par le fait que** lesdites fibres longues sont des fibres de polypropylène.

10. Procédé de fabrication d'un dispositif de filtration comportant un media filtrant en nappe (3) et au moins une grille de matière thermoplastique (4), procédé comportant une étape de superposition du media (3) et de la grille (4), une étape de fixation de ces deux éléments et une étape de plissage de ces deux éléments superposés, **caractérisé en ce que** l'étape de fixation consiste en la réalisation d'au moins une soudure par fusion, cette étape de fixation étant intercalée entre l'étape de superposition et l'étape de plissage.

11. Procédé selon la revendication 10, **caractérisé en ce que** la soudure est réalisée parallèlement au sens de déplacement des éléments lors de l'étape de plissage.

12. Procédé selon la revendication 10, **caractérisé en ce que** la soudure est réalisée grâce à un agencement de soudage mobile translaté perpendiculairement au sens de déplacement des éléments lors de l'étape de plissage.

13. Procédé selon la revendication 10, **caractérisé en ce que** cette étape de fixation est réalisée sur la même machine que l'étape de plissage.

14. Procédé selon l'une quelconque des revendications 10 à 13, **caractérisé par le fait que** la soudure par fusion est une soudure à ultrasons.

15. Procédé selon l'une quelconque des revendications 10 à 13, **caractérisé par le fait que** la soudure par fusion est une soudure réalisée à l'aide d'une molette chauffante.

16. Procédé selon l'une quelconque des revendications 10 à 13, **caractérisé par le fait que** la soudure par fusion est réalisée à l'aide d'une toupie.

17. Dispositif pour la mise en oeuvre du procédé selon la revendication 10, **caractérisé en ce qu'**il comporte un agencement de soudure mis en place au droit desdits éléments (3,4) entre des rouleaux d'alimentation (1,2) du média et de la grille en bande et une plisseuse (5).

18. Dispositif selon la revendication 17, **caractérisé en ce que** l'agencement de soudure est constitué d'une enclume fixe (7) disposée sous lesdits éléments et d'une sonotrode fixe (6) disposée en vis à vis sur lesdits éléments.

19. Dispositif selon la revendication 17, **caractérisé en ce que** l'agencement de soudure est constitué d'une enclume disposée sous lesdits éléments et d'une sonotrode associée disposée en vis à vis sur lesdits éléments et mobile, translatée perpendiculairement au sens de déplacement des éléments lors de l'étape de plissage.

20. Dispositif selon la revendication 17, **caractérisé en ce que** l'agencement de soudure est constitué d'une contre-pièce (27) disposée sous lesdits éléments et d'une molette associée disposée en vis à vis sur lesdits éléments.

## Claims

1. Filtering device which is designed to be used on equipment for ventilation and/or heating and/or air conditioning, in particular for a motor vehicle, comprising a filtering medium in the form of a sheet (3) and at least one grid (4) made of thermoplastic material, the grid and the filtering medium being pleated such as to form pleating lines, and being secured locally in a targeted manner at least by one fusion weld, **characterised in that** the fusion weld follows a welding line which forms a non-zero angle with at least one pleating line.

2. Filtering device according to claim 1, **characterised in that** the welding line is perpendicular to the pleating line.

3. Filtering device according to claim 1, **characterised in that** the welding line is in the form of a zigzag.

4. Filtering device according to any one of claims 1 to 3, **characterised in that** the welding line is discontinuous.

5. Filtering device according to claim 1, **characterised in that** the weld is formed according to one or more lines with a small surface area.

6. Filtering device according to claim 1, **characterised in that** the filtering medium (11) comprises a non-woven mat consisting of a carded voile (or web).

7. Filtering device according to claim 6, **characterised in that** the carded voile forms a single sheet.

8. Filtering device according to claim 7, **characterised in that** the carded voile comprises long fibres which have a mean diameter of 10 µm or more.

9. Filtering device according to claim 8, **characterised in that** the said long fibres are polypropylene fibres.

10. Method for production of a filtering device, comprising a filtering medium in the form of a sheet (3) and at least one grid made of thermoplastic material (4), which method comprises a step of superimposition of the medium (3) and the grid (4), a step of securing of these two elements, and a step of pleating these two superimposed elements, **characterised in that** the securing step consists of producing at least one fusion weld, this securing step being interposed between the superimposition step and the pleating step.

11. Method according to claim 10, **characterised in that** the weld is produced parallel to the direction of displacement of the elements during the pleating step.

12. Method according to claim 10, **characterised in that** the weld is produced by means of a mobile welding fixture which is translated perpendicularly to the direction of displacement of the elements during the pleating step.

13. Method according to claim 10, **characterised in that** this securing step is carried out on the same machine as the pleating step.

14. Method according to any one of claims 10 to 13, **characterised in that** the fusion weld is an ultrasound weld.

15. Method according to any one of claims 10 to 13, **characterised in that** the fusion weld is a weld produced by means of a knurled heating wheel.

16. Method according to any one of claims 10 to 13, **characterised in that** the fusion weld is produced by means of a spinning head.

17. Device for implementation of the method according to claim 10, **characterised in that** it comprises a welding fixture which is put into place at right-angles to the said elements (3, 4), between rollers (1, 2) to supply the medium and the grid in the form of a strip and a pleater (5).

18. Device according to claim 17, **characterised in that** the welding fixture consists of a fixed anvil (7) which is disposed beneath the said elements, and a fixed sonotrode (6) which is disposed opposite on the said elements.

19. Device according to claim 17, **characterised in that** the welding fixture consists of an anvil which is disposed beneath the said elements, and an associated sonotrode which is disposed opposite on the said elements and is mobile, being translated perpendicularly to the direction of displacement of the elements during the pleating step.

20. Device according to claim 17, **characterised in that** the welding fixture consists of a counter-piece (27) which is disposed beneath the said elements and an associated knurled wheel which is disposed opposite on the said elements.

## Patentansprüche

1. Filtervorrichtung zur Ausrüstung einer Belüftungs- und/oder Heizungs- und/oder Klimaanlage, insbesondere für Kraftfahrzeuge, mit einem Filtermedium in einer Lage (3) und wenigstens einem Gitter (4) aus Thermoplast, wobei das Gitter und das Filtermedium so gefaltet sind, dass Faltelinien gebildet werden, und örtlich gezielt wenigstens durch eine Schmelzschweißnaht befestigt sind, **dadurch gekennzeichnet, dass** die Schmelzschweißnaht einer Schweißlinie folgt, die einen Winkel ungleich null mit wenigstens einer Faltelinie bildet.

2. Filtervorrichtung nach Anspruch 1, **dadurch gekennzeichnet, dass** die Schweißlinie senkrecht zur Faltelinie verläuft.

3. Filtervorrichtung nach Anspruch 1, **dadurch gekennzeichnet, dass** die Schweißlinie zickzackförmig verläuft.

4. Filtervorrichtung nach einem der Ansprüche 1 bis 3, **dadurch gekennzeichnet, dass** die Schweißlinie unterbrochen ist.

5. Filtervorrichtung nach Anspruch 1, **dadurch gekennzeichnet, dass** die Schweißnaht entlang einer oder mehreren Linien mit geringer Fläche ausgeführt ist.

6. Filtervorrichtung nach Anspruch 1, **dadurch gekennzeichnet, dass** das Filtermedium (11) eine Vliesmatte umfasst, die aus einem Krempelvlies besteht.

7. Filtervorrichtung nach Anspruch 6, **dadurch gekennzeichnet, dass** das Krempelvlies eine einzige Lage bildet.

8. Filtervorrichtung nach Anspruch 7, **dadurch gekennzeichnet, dass** das Krempelvlies Langfasern umfasst, die einen mittleren Durchmesser größer oder gleich 10 µm aufweisen.

9. Filtervorrichtung nach Anspruch 8, **dadurch gekennzeichnet, dass** es sich bei den besagten Langfasern um Polypropylenfasern handelt.

10. Verfahren zur Herstellung einer Filtervorrichtung mit einem Filtermedium in einer Lage (3) und wenigstens einem Gitter aus Thermoplast (4), wobei das Verfahren einen Verfahrensschritt zum Übereinanderlegen des Filtermediums (3) und des Gitters (4), einen Verfahrensschritt zur Befestigung dieser beiden Elemente und einen Verfahrensschritt zum Falten dieser beiden übereinandergelegten Elemente umfasst, **dadurch gekennzeichnet, dass** der Verfahrensschritt zur Befestigung in der Ausführung wenigstens einer Schmelzschweißnaht besteht, wobei dieser Verfahrensschritt zur Befestigung zwischen dem Verfahrensschritt zum Übereinanderlegen und dem Verfahrensschritt zum Falten eingefügt ist.

11. Verfahren nach Anspruch 10, **dadurch gekennzeichnet, dass** die Schweißnaht parallel zur Bewegungsrichtung der Elemente beim Verfahrensschritt zum Falten ausgeführt wird.

12. Verfahren nach Anspruch 10, **dadurch gekennzeichnet, dass** die Schweißnaht dank einer beweglichen Schweißanordnung ausgeführt wird, die senkrecht zur Bewegungsrichtung der Elemente beim Verfahrensschritt zum Falten verfahren wird.

13. Verfahren nach Anspruch 10, **dadurch gekennzeichnet, dass** dieser Verfahrensschritt zur Befestigung an der gleichen Maschine wie der Verfahrensschritt zum Falten ausgeführt wird.

14. Verfahren nach einem der Ansprüche 10 bis 13, **dadurch gekennzeichnet, dass** es sich bei dem Schmelzschweißen um ein Ultraschallschweißen handelt.

15. Verfahren nach einem der Ansprüche 10 bis 13, **dadurch gekennzeichnet, dass** es sich bei dem Schmelzschweißen um ein mit Hilfe einer Heizrolle ausgeführtes Schweißen handelt.

16. Verfahren nach einem der Ansprüche 10 bis 13, **dadurch gekennzeichnet, dass** das Schmelzschweißen mit Hilfe einer Spindel erfolgt.

17. Vorrichtung zur Anwendung des Verfahrens nach Anspruch 10, **dadurch gekennzeichnet, dass** sie eine Schweißanordnung, die in Höhe der besagten Elemente (3, 4) zwischen Zuführrollen (1, 2) für die Zuführung des Filtermediums und des Gitters in Bandform angebracht ist, und eine Faltmaschine (5) umfasst.

18. Vorrichtung nach Anspruch 17, **dadurch gekennzeichnet, dass** die Schweißanordnung aus einem unter den besagten Elementen angeordneten ortsfesten Amboss (7) und einer ortsfesten Sonotrode (6) besteht, die gegenüber auf den besagten Elementen angeordnet ist.

19. Vorrichtung nach Anspruch 17, **dadurch gekennzeichnet, dass** die Schweißanordnung aus einem unter den besagten Elementen angeordneten Amboss und einer zugehörigen Sonotrode besteht, die gegenüber auf den besagten Elementen angeordnet und beweglich ist, wobei sie beim Verfahrensschritt zum Falten senkrecht zur Bewegungsrichtung der besagten Elemente verfahren wird.

20. Vorrichtung nach Anspruch 17, **dadurch gekennzeichnet, dass** die Schweißanordnung aus einem unter den besagten Elementen angeordneten Gegenstück (27) und einer zugehörigen Rolle besteht, die gegenüber auf den besagten Elementen angeordnet ist.
